# EUROPÄISCHE PATENTANMELDUNG

(11) **EP 1 630 386 A1**
(43) Veröffentlichungstag der Anmeldung: **01.03.2006**
(21) Anmeldenummer: 04104032.0
(22) Anmeldetag: 23.08.2004
(51) Int. Cl.: F02D 41/00, F02M 25/00

(54) **Verfahren zum Betreiben einer Hybrid-Brennkraftmaschine, die einen Betrieb sowohl im HCCI-Modus als auch im SI-Modus ermöglicht, und Brennkraftmaschine zur Durchführung des Verfahrens**

(71) Anmelder: Ford Global Technologies, LLC, A subsidary of Ford Motor Company, Dearborn, MI 48126 (US)
(72) Erfinder: Stoffels, Harald, 50733 Koeln (DE)
(74) Vertreter: Drömer, Hans-Carsten

(57) **Zusammenfassung**

Die Erfindung betrifft ein Verfahren zum Betreiben einer Hybrid-Brennkraftmaschine (10), die einen Betrieb sowohl im HCCI-Modus (homogenous-charge compression-ignition) als auch im SI-Modus (spark ignition) ermöglicht und die mindestens zwei Zylindergruppen aufweist, von denen jede Zylindergruppe mindestens einen Zylinder (1,2,3,4) umfaßt, wobei jeder Zylinder (1,2,3,4) mittels eines Ansaugrohres (5a,5b,5c,5d) mit Zylinderfrischladung versorgt wird und dessen Abgas in ein Abgasrohr (6a,6b,6c,6d) abgeführt wird.

Es soll ein Verfahren bereitgestellt werden, mit dem die nach dem Stand der Technik bekannten Nachteile überwunden werden, mit dem also insbesondere ein Betrieb im HCCI-Verfahren auch bei niedrigen Lasten und/oder hohen Drehzahlen möglich ist.

Erreicht wird dies durch ein Verfahren der oben genannten Art, welches dadurch gekennzeichnet ist, daß
· der mindestens eine Zylinder (1,2,3,4) der ersten Zylindergruppe im HCCI-Modus betrieben wird,
· der mindestens eine Zylinder (1,2,3,4) der zweiten Zylindergruppe im SI-Modus betrieben wird, und
· das Abgas des mindestens einen Zylinders (1,2,3,4) der zweiten Zylindergruppe zur Erhöhung der Temperatur der dem mindestens einen Zylinder (1,2,3,4) der ersten Zylindergruppe zugeführten Zylinderfrischladung verwendet wird.

Des weiteren wird eine Hybrid-Brennkraftmaschine (10) zur Durchführung des Verfahrens bereitgestellt.

## Beschreibung

Die Erfindung betrifft ein Verfahren zum Betreiben einer Hybrid-Brennkraftmaschine, die einen Betrieb sowohl im HCCI-Modus (homogenous-charge compression-ignition) als auch im SI-Modus (spark ignition) ermöglicht und die mindestens zwei Zylindergruppen aufweist, von denen jede Zylindergruppe mindestens einen Zylinder umfaßt, wobei jeder Zylinder mittels eines Ansaugrohres mit Zylinderfrischladung versorgt wird und dessen Abgas in ein Abgasrohr abgeführt wird.

Des Weiteren betrifft die Erfindung eine Brennkraftmaschine, insbesondere zur Durchführung eines derartigen Verfahrens, die einen Betrieb sowohl im HCCI-Modus (homogenous-charge compression-ignition) als auch im SI-Modus (spark ignition) ermöglicht und die mindestens zwei Zylindergruppen aufweist, von denen jede Zylindergruppe mindestens einen Zylinder umfaßt, wobei jeder Zylinder ein Ansaugrohr zur Versorgung des Zylinders mit Zylinderfrischladung und ein Abgasrohr zur Abführung der Abgase aufweist.

Unter SI-Verfahren sind im Rahmen der vorliegenden Erfindung sämtliche Brennverfahren zu verstehen, bei denen die Verbrennung mittels einer Zündkerze eingeleitet wird, bzw. alle Verfahren, die mit einer Fremdzündung arbeiten und bei denen diese Fremdzündung mittels Zündkerze initiiert wird.

Das HCCI-Verfahren, das seinen Namen von der englischen Bezeichnung "homogenous-charge compression-ignition" erhalten hat, ist ein erst vor kurzem wieder in den Focus gerücktes Brennverfahren zum Betreiben einer Brennkraftmaschine. Dieses Verfahren, das in der Fachwelt auch als CAI-Verfahren (Controlled Auto-Ignition) bezeichnet wird, basiert auf einer kontrollierten Selbstzündung des dem Zylinder zugeführten Kraftstoffes. Dabei wird der Kraftstoff - wie bei einem direkteinspritzenden Ottomotor - unter Luftüberschuß - also überstöchiometrisch - verbrannt. Der im mageren Bereich betriebene Ottomotor weist aufgrund der niedrigen Verbrennungstemperaturen vergleichsweise geringe Stickoxidemissionen (NOₓ) auf und ebenfalls infolge des mageren Gemisches keine Rußemissionen.

Darüber hinaus führt das HCCI-Verfahren zu einem hohen thermischen Wirkungsgrad. Der Kraftstoff kann dabei sowohl direkt in die Zylinder als auch in das Ansaugrohr eingebracht werden, wobei eine Direkteinspritzung zusätzlich eine Entdrosselung der Brennkraftmaschine durch Eliminierung der Drosselklappe und Vorsehen eines variablen Ventiltriebs gestattet.

Aufgrund der niedrigeren Verbrennungstemperaturen und der damit verbundenen geringeren Temperaturdifferenzen in der Brennkraftmaschine sind die Wärmeverluste geringer als bei herkömmlich betriebenen Brennkraftmaschinen.

Das HCCI-Verfahren und eine Brennkraftmaschine, die dieses Verfahren zur Verbrennung des Kraftstoffes verwendet, werden in der US 6,390,054 B1 beschrieben.

Nach dem Stand der Technik weist das HCCI-Verfahren mehrere Nachteile auf, die im wesentlichen dazu führen, daß dieses Verfahren nicht in sämtlichen Betriebspunkten einer Brennkraftmaschine eingesetzt werden kann, so daß sich die - oben bereits beschriebenen - Vorteile nur in einem kleinen Bereich des Motorkennfeldes (Last über Drehzahl) nutzen lassen. Dies ist auch der Grund dafür, daß nach dem Stand der Technik eine Brennkraftmaschine nicht ausschließlich nach dem HCCI-Verfahren betrieben werden kann, sondern grundsätzlich ein Hybridantrieb erforderlich ist, um die Brennkraftmaschine in den Betriebspunkten, in denen das HCCI-Verfahren versagt, trotzdem betrieben zu können.

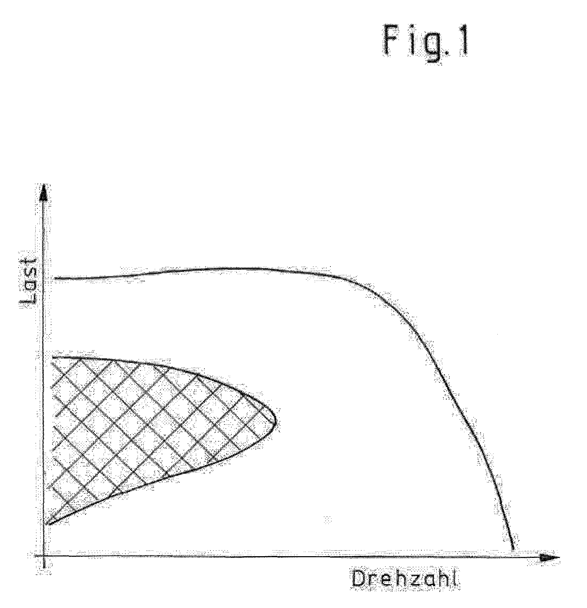

Figur 1 zeigt beispielhaft das Motorkennfeld einer Brennkraftmaschine, in das der Bereich, in dem das herkömmliche HCCI-Verfahren zur Anwendung kommen kann, eingezeichnet ist. Das HCCI-Verfahren kann danach nur bedingt bei hohen und niedrigen Lasten und mittleren bis hohen Drehzahlen eingesetzt werden. Die Gründe hierfür werden im folgenden kurz dargelegt.

Grundsätzlich ergeben sich in der Anwendung des HCCI-Verfahrens Beschränkungen, die aus der Steuerung des Zündzeitpunktes der Selbstzündung und der Steuerung der Brenngeschwindigkeit d.h. des Brennverlauf herrühren. Die Selbstzündung wird eingeleitet, wenn das Kraftstoff-Luftgemisch während der Verdichtung eine bestimmte Temperatur erreicht, wobei die Selbstzündung in Abhängigkeit von den die Zündung und Verbrennung beeinflussenden Parametern zu jedem Zeitpunkt der Verdichtung erfolgen kann.

Mit zunehmender Last wird die Selbstzündung infolge des abnehmenden Luftverhältnisses nach früh verschoben d. h. das Kraftstoff-Luftgemisch zündet in der Kompressionsphase zu einem früheren Zeitpunkt, wobei die Umsatzraten bzw. die Brenngeschwindigkeit ebenfalls zunehmen. Durch die frühere und schwerer zu steuernde Verbrennung und insbesondere durch die schnellere Brenngeschwindigkeit wird der Lauf der Brennkraftmaschine ungleichförmiger und härter, wobei letzteres vergleichbar ist mit dem für Dieselmotoren typischen Dieselnageln, das ebenfalls durch einen steilen Druckanstieg infolge der sprunghaft einsetzenden Verbrennung verursacht wird. Zudem sinkt infolge der weit vor dem oberen Totpunkt (OT) freigesetzten Verbrennungswärme der thermische Wirkungsgrad.

Wird hingegen die Last gesenkt, setzt infolge des mageren Betriebes die Selbstzündung später ein oder bleibt sogar ganz aus, so daß es zu einer unvollständigen Verbrennung oder zu Zündaussetzern und erhöhten Emissionen von unverbrannten Kohlenwasserstoffen und Kohlenmonoxid kommen kann.

Mit zunehmender Drehzahl wird die Zeit, die zur Aufbereitung des Kraftstoff-Luftgemisches im Rahmen von Vorreaktionen zur Verfügung gestellt wird, verkürzt, so daß es auch bei hohen Drehzahlen zu Zündaussetzern kommen kann. Zudem wird der Schwerpunkt der Verbrennung nach spät verschoben, so daß sich der thermische Wirkungsgrad des Verbrennungsprozesses verschlechtert.

Um das HCCI-Verfahren auch für die drei zuvor beschriebenen Szenarien tauglich zu machen und den Anwendungsbereich dieses Verfahrens zu erweitern, werden nach dem Stand der Technik verschiedene Konzepte vorgeschlagen, wobei durch verschiedene Maßnahmen versucht wird, Einfluß zu nehmen auf die Temperatur der dem Zylinder zugeführten Zylinderfrischladung.

Die US 6,390,054 B1 schlägt vor, die Temperatur der Zylinderfrischladung mit zunehmender Last abzusenken, wodurch die Selbstzündung nach spät verschoben wird und die Brenngeschwindigkeit gesenkt werden kann, womit exakt den bei zunehmender Last beobachteten und oben beschriebenen Effekten entgegengewirkt wird. Eine Absenkung der Temperatur kann dabei beispielsweise durch die Rückführung gekühlten Abgases im Rahmen einer Abgasrückführung erfolgen oder aber durch die Absenkung des effektiven Verdichtungsverhältnisses, was durch spätes Schließen der Einlaßventile erreicht wird. Bei aufgeladenen Brennkraftmaschinen kann insbesondere eine verstärkte Kühlung mittels eines vorhandenen Ladeluftkühlers zielführend sein.

Für die Szenarien, in denen die Last gesenkt wird und/oder die Drehzahl erhöht wird, schlägt die US 6,390,054 B1 vor, die Temperatur der Zylinderfrischladung anzuheben und damit einerseits eine sichere Selbstzündung zu gewährleisten und diese Zündung nach früh zu verschieben. Damit wird den bei abnehmenden Lasten beobachteten Zündaussetzern entgegengetreten. Bei hohen Drehzahlen können die Vorreaktionen früher einsetzen, so daß auch in diesen Betriebspunkten eine thermodynamisch effektive Verbrennung möglich wird. Die Emission von Kohlenmonoxid und unverbrannten Kohlenwasserstoffen wird reduziert.

Eine Erhöhung der Temperatur kann dabei beispielsweise durch die Rückführung heißen Abgases im Rahmen einer Abgasrückführung erfolgen oder aber durch die Aufwärmung der Zylinderfrischladung in einem Wärmetauscher. Dabei kann bei sinkender Last die Temperatur der Zylinderfrischladung nur bedingt mittels Abgasrückführung angehoben werden, da mit sinkender Last auch die Abgastemperatur abnimmt. Die Abgastemperatur ist gerade in den Betriebszuständen der Brennkraftmaschine, in denen eine große Temperaturerhöhung und folglich eine hohe Abgasrückführungsrate erforderlich wäre, unvorteilhaft niedrig.

Die beschriebenen Maßnahmen stellen zwar eine vorteilhafte Weiterentwicklung des herkömmlichen HCCI-Verfahrens dar. Dennoch besteht ein erheblicher Bedarf an Maßnahmen, die die Anwendungsmöglichkeiten des HCCI-Verfahrens erweitern, insbesondere eine Anwendung in möglichst vielen Betriebspunkten des Motorenkennfeldes gestatten.

Im übrigen liegt der Schwerpunkt der zitierten US 6,390,054 B1 auf einem Verfahren zur Steuerung einer Hybrid-Brennkraftmaschine, die einen Betrieb sowohl im HCCI-Modus als auch im SI-Modus ermöglicht, wobei die Überführung der Zylinder vom HCCI-Modus zum SI-Modus und umgekehrt im Vordergrund steht.

Vor diesem Hintergrund ist es die Aufgabe der vorliegenden Erfindung, ein Verfahren zum Betreiben einer Hybrid-Brennkraftmaschine gemäß dem Oberbegriff des Anspruches 1 aufzuzeigen, mit dem die nach dem Stand der Technik bekannten Nachteile überwunden werden.

Eine weitere Teilaufgabe der vorliegenden Erfindung besteht darin, eine Brennkraftmaschine zur Durchführung des Verfahrens bereitzustellen.

Gelöst wird die erste Teilaufgabe durch ein Verfahren zum Betreiben einer Hybrid-Brennkraftmaschine, die einen Betrieb sowohl im HCCI-Modus als auch im SI-Modus ermöglicht und die mindestens zwei Zylindergruppen aufweist, von denen jede Zylindergruppe mindestens einen Zylinder umfaßt, wobei jeder Zylinder mittels eines Ansaugrohres mit Zylinderfrischladung versorgt wird und dessen Abgas in ein Abgasrohr abgeführt wird, und das dadurch gekennzeichnet ist, daß
■ der mindestens eine Zylinder der ersten Zylindergruppe im HCCI-Modus betrieben wird,
■ der mindestens eine Zylinder der zweiten Zylindergruppe im SI-Modus betrieben wird, und
■ das Abgas des mindestens einen Zylinders der zweiten Zylindergruppe zur Erhöhung der Temperatur der dem mindestens einen Zylinder der zweiten Zylindergruppe zugeführten Zylinderfrischladung verwendet wird.

Bei dem erfindungsgemäßen Verfahren wird eine erste Gruppe von Zylindern im HCCI-Modus und eine zweite Gruppe von Zylindern im SI-Modus betrieben und zwar nicht nur - wie in der US 6,390,054 beschrieben - während des Überganges vom dem einen in den anderen Modus bzw. während der Überleitung der Zylinder in einen anderen Modus, sondern auch kontinuierlich. Dabei wird die Temperatur der Zylinderfrischladung, die den im HCCI-Modus betriebenen Zylindern zugeführt wird, mittels des durch die Verbrennung generierten Abgases angehoben

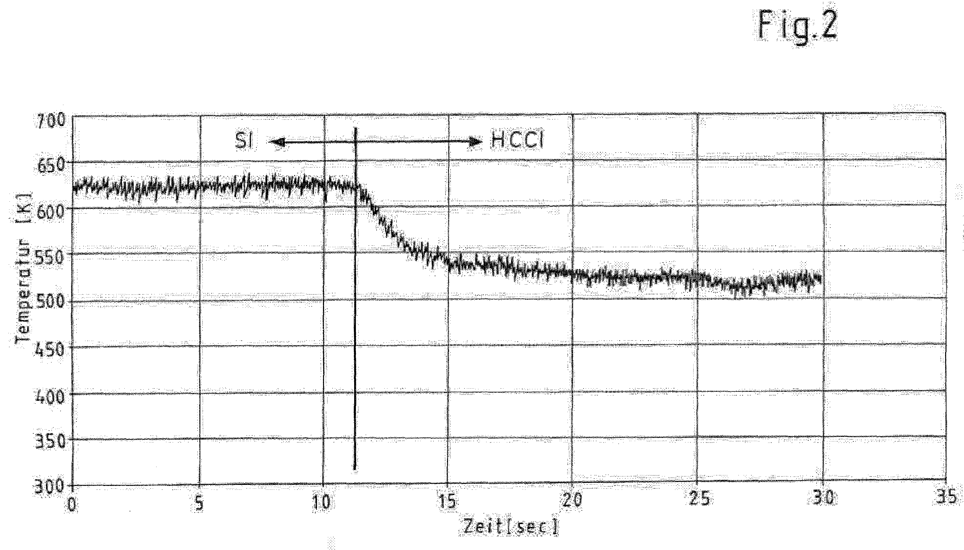

Dies kann beispielsweise durch die Rückführung heißer Abgase in den Ansaugtrakt erfolgen oder durch Ausnutzung der Abgaswärme mittels eines Wärmetauschers. Dabei wird erfindungsgemäß gezielt das Abgas der im SI-Modus arbeitenden Zylinder verwendet, das heißer ist als das Abgas der nach dem HCCI-Modus arbeitenden Zylinder (siehe auch Figur 2). Das HCCI-Verfahren zeichnet sich gerade durch das - im Vergleich zum SI-Verfahren - grundsätzlich niedrigere Temperaturniveau aus, was - wie oben beschrieben - auch Vorteile hat, beispielsweise hinsichtlich der Stickoxidemissisonen.

Mit dem erfindungsgemäßen Verfahren kann durch eine isolierte Ausnutzung der Abgasenergie des separierten heißen Abgases der im SI-Modus betriebenen Zylinder eine größere bzw. schnellere Temperaturerhöhung der Zylinderfrischladung der im HCCI-Modus arbeitenden Zylinder herbeigeführt werden als dies nach dem Stand der Technik möglich ist.

Herkömmliche Verfahren nutzen zwar auch die Abgasenergie zur Temperaturerhöhung. Es werden aber die Abgase eines Zylinders genutzt, um die Zylinderfrischladung dieses einen Zylinders zu erwärmen. Oder aber die im Abgassammelrohr zusammengeführten Abgasströme werden in ihrer Gesamtheit nutzbar gemacht, beispielsweise durch Wärmeübertragung in einem Wärmetauscher. Eine gezielte Kopplung eines im SI-Modus betriebenen Zylinders und eines im HCCI-Modus betriebenen Zylinders, wie dies mit dem erfindungsgemäßen Verfahren vorgeschlagen wird, erfolgt nicht.

Dies ermöglicht den Betrieb einer ersten Gruppe von Zylindern der Brennkraftmaschine nach dem HCCI-Verfahren unter Betriebsbedingungen, die mit herkömmlichen Verfahren der Anwendung des HCCI-Verfahrens nicht zugänglich waren. Der Anwendungsbereich dieses Verfahrens wird damit auf vorher nicht zugängliche Betriebsbereiche des Motorkennfeldes ausgedehnt, so daß auch in diesen Bereichen die grundsätzlichen Vorteile des HCCI-Verfahrens, beispielsweise die niedrige Stickoxidemission, nutzbar werden.

Durch die Temperaturerhöhung der Zylinderfrischladung wird eine sichere Selbstzündung gewährleistet und die Zündung nach früh verschoben, so daß das HCCI-Verfahren auch bei niedrigen Lasten und/oder hohen Drehzahlen zum Einsatz kommen kann und es nicht erforderlich ist, die im HCCI-Modus arbeitenden Zylinder unter diesen Betriebsbedingungen in den SI-Modus zu überführen.

Infolgedessen kann in weiten Teilen des Teillastbereiches eine Gruppe von Zylindern im HCCI-Modus betrieben werden. Vorteilhaft ist dies insbesondere deshalb, weil eine Brennkraftmaschine überwiegend im Teillastbereich betrieben wird, insbesondere im Stadtverkehr. Ein Überführen der Zylinder vom HCCI-Modus in den SI-Modus und umgekehrt ist weniger häufig notwendig als beim herkömmlichen Verfahren nach dem Stand der Technik. Eine Reduzierung der Anzahl dieser Überführungen ist als günstig anzusehen, weil die Überführung regelungstechnisch aufwendig ist und nicht immer völlig problemlos bewerkstelligt werden kann.

Dadurch wird die erste der Erfindung zugrunde liegende Aufgabe gelöst, nämlich ein Verfahren zum Betreiben einer Hybrid-Brennkraftmaschine gemäß dem Oberbegriff des Anspruches 1 bereitzustellen, mit dem die nach dem Stand der Technik bekannten Nachteile überwunden werden, mit dem also insbesondere ein Betrieb im HCCI-Verfahren auch bei niedrigen und hohen Lasten und/oder hohen Drehzahlen möglich ist.

Ein weiterer Vorteil des erfindungsgemäßen Verfahrens besteht darin, daß das Überleiten der Brennkraftmaschine vom SI- in den HCCI-Betriebsmodus schneller und störungsfreier vorgenommen werden kann. Der Grund dafür liegt in dem Umstand, daß das Temperaturniveau der im HCCI-Modus betriebenen Zylinder erfindungsgemäß wegen der Ausnutzung der Abgasenergie der im SI-Modus betriebenen Zylinder vergleichsweise - im Hinblick auf nach dem herkömmlichen HCCI-Modus betriebene Zylinder - hoch ist. Dadurch kann ein unerwünschter Drehmomentabfall vermieden werden.

Es sind keine Zwischenarbeitsspiele im Rahmen der Überleitung zum Zwecke einer Temperaturerhöhung notwendig. Nach dem Stand der Technik ist es hingegen erforderlich durch eine Veränderung der Ventilsteuerzeiten, beispielsweise mittels einer negativen Ventilüberschneidung und einem damit verbundenen höheren Restgasanteil im Zylinder, die Temperatur zu erhöhen, wobei die Zylinder im HCCI-Modus anschließend mit diesen veränderten Steuerzeiten weiterbetrieben werden.

Weitere Vorteile des erfindungsgemäßen Verfahrens werden im Zusammenhang mit den Ausführungsformen gemäß den Unteransprüchen erörtert.

Vorteilhaft sind Ausführungsformen des Verfahrens, bei denen das Abgasrohr des mindestens einen Zylinders der zweiten Zylindergruppe mit dem Ansaugrohr des mindestens einen Zylinders der ersten Zylindergruppe mittels einer Verbindungsleitung verbunden wird, und Abgas aus dem Abgasrohr des mindestens einen Zylinders der zweiten Zylindergruppe in das Ansaugrohr des mindestens einen Zylinders der ersten Zylindergruppe zurückgeführt wird, um die Temperatur der Zylinderfrischladung des mindestens einen im HCCI-Modus betriebenen Zylinders zu erhöhen.

Diese Ausführungsform nutzt die Abgasenergie des heißen Abgases der im SI-Modus betriebenen Zylinder durch Abgasrückführung, wobei eine isolierte Ausnutzung durch eine gezielte separate Rückführung nur eines Teils des Gesamtabgasstromes, nämlich des Abgasstromes des mindestens einen im SI-Modus betriebenen Zylinders, erreicht wird. Die Rückführung von Abgas führt dabei zusätzlich zu einer kontrollierteren und gleichförmigeren Verbrennung.

Vorteilhaft sind Ausführungsformen des Verfahrens, bei denen jede Zylindergruppe mindestens zwei Zylinder aufweist und beide Zylindergruppen die gleiche Anzahl an Zylindern aufweisen, wobei jeweils das Abgasrohr eines Zylinders der zweiten Zylindergruppe mit dem Ansaugrohr eines Zylinders der ersten Zylindergruppe mittels einer Verbindungsleitung verbunden wird, und Abgas aus den Abgasrohren der Zylinder der zweiten Zylindergruppe in die Ansaugrohre der Zylinder der ersten Zylindergruppe zurückgeführt wird, um die Temperatur der Zylinderfrischladung der im HCCI-Modus betriebenen Zylinder zu erhöhen.

Bei Brennkraftmaschinen mit mindestens vier Zylindern werden jeweils paarweise im SI-Modus arbeitende Zylinder mit im HCCI-Modus arbeitenden Zylindern verbunden bzw. gekoppelt. Diese Vorgehensweise hat insbesondere dann Vorteile, wenn die Zündfolge der Brennkraftmaschine berücksichtigt wird und die Zylinder unter Berücksichtigung der Zündfolge miteinander verbunden bzw. gekoppelt werden, was weiter unten noch näher beschrieben werden wird.

Grundsätzlich können aber die Abgasrohre der im SI-Modus betriebenen Zylinder zusammengelegt werden und dann mittels einer Verbindungsleitung mit den Ansaugrohren der im HCCI-Modus betrieben Zylinder, die ebenfalls zusammengelegt werden können, verbunden werden. Dies reduziert die Anzahl der Bauteile und den erforderlichen Bauraum.

Vorteilhaft sind Ausführungsformen des Verfahrens, bei denen in der Verbindungsleitung ein Ventilelement vorgesehen ist, mit dem die Menge an zurückgeführtem Abgas geregelt wird. Dadurch kann das Mischungsverhältnis von rückgeführtem Abgas und angesaugter Frischluft reguliert werden, wodurch sich die Temperatur der Zylinderfrischladung einstellen läßt. Das heißt, daß durch das Ventil indirekt Einfluß genommen wird auf die Größe der Temperaturerhöhung bzw. die Temperatur der Zylinderfrischladung.

Vorteilhaft sind Ausführungsformen des Verfahrens, bei denen die im HCCI-Modus betriebenen Zylinder zusätzlich fremdgezündet werden, um Zündaussetzer und Fehlzündungen zu unterbinden. Da jeder Zylinder der Brennkraftmaschine sowohl im HCCI-Modus als auch im SI-Modus betrieben werden kann, ist auch jeder Zylinder mit einer Fremdzündung, nämlich einer Zündkerze, ausgestattet, um das Kraftstoff-Luftgemisch im SI-Modus zu zünden. In Grenzbereichen des HCCI-Verfahrens, in denen es nicht immer sichergestellt werden kann, daß der Kraftstoff sich selbstentzündet und vollständig verbrannt wird, wird das Gemisch zusätzlich mittels einer Zündkerze fremdgezündet. Dadurch wird eine Verbrennung des Kraftstoffes gewährleistet. Die Emissionen an Kohlenmonoxid (CO) und unverbrannten Kohlenwasserstoffen (HC) werden reduziert und die Laufruhe der Brennkraftmaschine verbessert.

Vorteilhaft sind Ausführungsformen des Verfahrens, bei denen zumindest bei den im HCCI-Modus betriebenen Zylindern der Kraftstoff direkt eingespritzt wird und eine Quantitätsregelung der zugeführten Frischluft mittels einer Variation der Steuerzeiten und/oder des Hubes der zur Steuerung des Ladungswechsels vorgesehenen Ventile erfolgt.

Die Direkteinspritzung des Kraftstoffes bietet entscheidende Vorteile bei der Gemischaufbereitung, wobei zusammen mit einer variablen Ventilsteuerung eine Entdrosselung der Brennkraftmaschine realisiert werden kann, was insbesondere im Teillastbereich die Ladungswechselverluste reduziert und den thermischen Wirkungsgrad des Prozesses anhebt. Eine Drosselklappe zur Quantitätsregelung der dem Zylinder zugeführten Frischladung kann entfallen. Die zugeführte Frischluft ist mittels der variablen Ventilsteuerung und die eingebrachte Kraftstoffmenge mittels der Direkteinspritzung für jeden Betriebspunkt individuell einstellbar.

Grundsätzlich kann im Rahmen des HCCI-Verfahrens aber auch eine Quantitätsregelung mittels Drosselklappe erfolgen und der Kraftstoff in das Ansaugrohr eingespritzt werden.

Vorteilhaft sind Ausführungsformen des Verfahrens, bei denen die im SI-Modus betriebenen Zylinder mit einem Luftüberschuß d.h. im Magerbetrieb betrieben werden.

Infolge des Luftüberschusses liegen hohen Konzentrationen an Stickoxiden vor. Bei herkömmlichen Brennkraftmaschinen im Magerbetrieb, insbesondere bei direkteinspritzenden Ottomotoren, können die im Abgas befindlichen Stickoxide prinzipbedingt - d.h. aufgrund der fehlenden Reduktionsmittel, nämlich CO und HC - nicht reduziert werden. Zur Reduzierung der Stickoxide (NOₓ) werden deshalb selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz.

Den Stickoxiden kann auch mit sogenannten Stickoxidspeicherkatalysatoren entgegengetreten werden. Dabei werden die Stickoxide zunächst während einer Speicherphase im Katalysator gesammelt, um dann während einer Regenerationsphase mittels eines unterstöchiometrischen Betriebs (beispielsweise λ < 0,95) der Brennkraftmaschine reduziert zu werden.

Sowohl der SCR-Katalysator als auch der Speicherkatalysator sind kostenintensive Zusatzaggregate, die eine komplexe Steuerung erfordern.

Der beschriebene Effekt, der aus dem SI-Betrieb der Brennkraftmaschine mit Luftüberschuß resultiert und nach dem Stand der Technik als nachteilig angesehen wird, weil er zusätzliche Abgasnachbehandlungssysteme erforderlich macht, kann im Zusammenwirken mit im HCCI-Modus betriebenen Zylindern Vorteile mit sich bringen.

Das HCCI-Verfahren zeichnet sich einerseits durch im Vergleich zu anderen Verfahren sehr geringe Stickoxidemissionen aus, die aus dem prinzipbedingt niedrigeren Temperaturniveau resultieren. Andererseits sind - insbesondere mit abnehmender Last - die Emissionen an Kohlenmonoxid und unverbrannten Kohlenwasserstoffen vergleichsweise hoch.

Mischen sich die Abgasströme der im SI-Modus betriebenen Zylinder und der im HCCI-Modus betriebenen Zylinder im Gesamtabgasrohr, liegt bei entsprechender Regelung der einzelnen Verfahren ein Gesamtiuftverhäitnis λ ≈ 1 vor, so daß die Schadstoffe in Konzentrationen und Konzentrationsverhältnissen vorliegen, die eine Abgasnachbehandlung mittels eines herkömmlichen Dreiwegkatalysators erlauben. Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden. Die Notwendigkeit, einen SCR-Katalysator oder einen Speicherkatalysator vorzusehen, entfällt.

Vorteilhaft sind Ausführungsformen des Verfahrens, bei denen die Abgase des mindestens einen Zylinders der zweiten Zylindergruppe und die Zylinderfrischladung des mindestens einen Zylinders der ersten Zylindergruppe einem Wärmetauscher zur Erhöhung der Temperatur der dem mindestens einen Zylinder der zweiten Zylindergruppe zugeführten Zylinderfrischladung zugeführt werden. Diese Vorgehensweise kann alternativ zu oder zusammen mit einer Abgasrückführung zur Nutzung der Abgasenergie der heißen Abgase der im SI-Modus betriebenen Zylinder eingesetzt werden. Dabei geben die heißen Abgase einen Teil ihrer Energie als Wärme an die Zylinderfrischladung ab.

Die zweite der Erfindung zugrundeliegende Teilaufgabe wird gelöst durch eine Hybrid-Brennkraftmaschine, die einen Betrieb sowohl im HCCI-Modus als auch im SI-Modus ermöglicht und die mindestens zwei Zylindergruppen aufweist, von denen jede Zylindergruppe mindestens einen Zylinder umfaßt, wobei jeder Zylinder ein Ansaugrohr zur Versorgung des Zylinders mit Zylinderfrischladung und ein Abgasrohr zur Abführung der Abgase aufweist, und die dadurch gekennzeichnet ist, daß
■ der mindestens eine Zylinder der ersten Zylindergruppe im HCCI-Modus betreibbar ist,
■ der mindestens eine Zylinder der zweiten Zylindergruppe im SI-Modus betreibbar ist, und
■ Mittel vorgesehen sind, die das Abgas des mindestens einen Zylinders der zweiten Zylindergruppe zur Erhöhung der Temperatur der dem mindestens einen Zylinder der zweiten Zylindergruppe zugeführten Zylinderfrischladung nutzbar machen.

Das bereits für das erfindungsgemäße Verfahren Gesagte gilt auch für die erfindungsgemäße Brennkraftmaschine.

Vorteilhaft sind Ausführungsformen der Hybrid-Brennkraftmaschine, bei denen das Abgasrohr des mindestens einen Zylinders der zweiten Zylindergruppe mit dem Ansaugrohr des mindestens einen Zylinders der ersten Zylindergruppe mittels einer Verbindungsleitung verbunden ist, so daß Abgas aus dem Abgasrohr des mindestens einen Zylinders der zweiten Zylindergruppe in das Ansaugrohr des mindestens einen Zylinders der ersten Zylindergruppe rückführbar ist, um die Temperatur der Zylinderfrischladung des mindestens einen im HCCI-Modus betriebenen Zylinders zu erhöhen.

Vorteilhaft sind auch Ausführungsformen der Hybrid-Brennkraftmaschine, bei denen jede Zylindergruppe mindestens zwei Zylinder aufweist und beide Zylindergruppen die gleiche Anzahl an Zylindern aufweisen, wobei jeweils das Abgasrohr eines Zylinders der zweiten Zylindergruppe mit dem Ansaugrohr eines Zylinders der ersten Zylindergruppe mittels einer Verbindungsleitung verbunden ist, so daß Abgas aus den Abgasrohren der Zylinder der zweiten Zylindergruppe in die Ansaugrohre der Zylinder der ersten Zylindergruppe rückführbar ist, um die Temperatur der Zylinderfrischladung der im HCCI-Modus betriebenen Zylinder zu erhöhen.

Die Verbindungsleitung dient zur Rückführung heißen Abgases der im SI-Modus betriebenen Zylinder in den Ansaugtrakt der im HCCI-Modus betriebenen Zylinder. Sie ermöglicht eine isolierte Ausnutzung der heißen Abgase der im SI-Modus betriebenen Zylinder durch eine separate Rückführung eines einzelnen Abgasstromes.

Die Zylinder werden dabei paarweise verbunden bzw. miteinander gekoppelt. Diese Vorgehensweise hat insbesondere dann Vorteile, wenn die Zündfolge der Brennkraftmaschine berücksichtigt wird.

Vorteilhaft sind beispielsweise Ausführungsformen der Hybrid-Brennkraftmaschine, bei denen die Hybrid-Brennkraftmaschine ein Vier-Zylinder-Reihenmotor ist und der erste und vierte Zylinder die erste Zylindergruppe bilden, wohingegen der zweite und dritte Zylinder die zweite Zylindergruppe bilden, wobei das Abgasrohr des zweiten Zylinders mit dem Ansaugrohr des vierten Zylinders mittels einer Verbindungsleitung verbunden ist und das Abgasrohr des dritten Zylinders mit dem Ansaugrohr des ersten Zylinders mittels einer Verbindungsleitung verbunden ist.

Ein Vier-Zylinder-Reihenmotor weist in der Regel aufgrund der Kröpfungsfolge der Kurbelwelle die Zündfolge 1 - 3 - 4 - 2 auf, wobei die einzelnen Zylinder im Abstand von jeweils 180°KW gezündet werden. Die Numerierung der Zylinder einer Brennkraftmaschine ist in der DIN 73021 geregelt. Bei Reihenmotoren werden die Zylinder der Reihe nach durchgezählt, wobei auf der Seite, die der Kupplung gegenüber liegt, begonnen wird. Bei der in Rede stehenden Variante werden die beiden außenliegenden Zylinder im HCCI-Modus und die beiden innenliegenden Zylinder im SI-Modus betrieben.

Werden die vier Zylinder in der vorgeschlagenen Weise miteinander verbunden, kann eine maximale Ausnutzung der Abgasenergie erfolgen, da die Abgase der im SI-Modus betriebenen Zylinder sehr zeitnah d. h. verzögerungsfrei genutzt werden und daher den Abgasen keine Zeit zur Abkühlung und Wärmeabgabe eingeräumt wird.

Wenn der zweite Zylinder, der im SI-Modus arbeitet, sich am Ende der Expansion im unteren Totpunkt befindet und die Verbrennungsgase in das Abgasrohr ausschiebt, durchläuft der vierte Zylinder, der im HCCI betrieben wird, gerade den Ladungswechsel-OT und saugt Frischluft bzw. Frischgemisch an. Die heißen Abgase des zweiten Zylinders werden also gerade zu dem Zeitpunkt bereitgestellt, zu dem der Bedarf für diese Gase besteht, wobei die heißen Abgase in die Ansaugleitung des vierten Zylinders gelangen und die Zylinderfrischladung aufheizen. Ähnliches gilt für das Zylinderpaar, das durch den ersten und dritten Zylinder gebildet wird.

Vorteilhaft sind ebenfalls Ausführungsformen der Hybrid-Brennkraftmaschine, bei denen die Hybrid-Brennkraftmaschine ein Vier-Zylinder-Reihenmotor ist und der zweite und dritte Zylinder die erste Zylindergruppe bilden, wohingegen der erste und vierte Zylinder die zweite Zylindergruppe bilden, wobei das Abgasrohr des ersten Zylinders mit dem Ansaugrohr des zweiten Zylinders mittels einer Verbindungsleitung verbunden ist und das Abgasrohr des vierten Zylinders mit dem Ansaugrohr des dritten Zylinders mittels einer Verbindungsleitung verbunden ist.

Bei dieser Ausführungsform werden die beiden innenliegenden Zylinder im HCCI-Modus und die beiden außenliegenden Zylinder im SI-Modus betrieben. Die Ausführungen hinsichtlich der zuvor beschriebenen Ausführungsform können analog übertragen werden, weshalb an dieser Stelle Bezug genommen wird auf diese Ausführungen.

Vorteilhaft sind Ausführungsformen der Hybrid-Brennkraftmaschine, bei denen die Hybrid-Brennkraftmaschine ein Sechs-Zylinder-Reihenmotor ist und drei Zylinder die Zylinder der ersten Zylindergruppe bilden und drei Zylinder die Zylinder der zweiten Zylindergruppe bilden, wobei jeweils das Abgasrohr eines Zylinders der zweiten Gruppe mit einem Ansaugrohr eines Zylinders der ersten Zylindergruppe, der 120°KW oder 240°KW vorher gezündet wird, mittels einer Verbindungsleitung verbunden ist.

Dadurch werden die heißen Abgase, die aus den im SI-Modus betriebenen Zylindern ausgeschoben werden, den Ansaugleitungen der entsprechenden im HCCI-Modus betriebenen Zylinder zugeführt d. h. jeweils dem Zylinder, der einen aktuellen Bedarf an heißen Abgasen aufweist, da er sich in der Ansaugphase befindet und Zylinderfrischladung ansaugt.

Um den vollständigen Massenausgleich bei einem Sechs-Zylinder-Reihenmotor zu realisieren, sind die Kurbelwellenzapfen bzw. -kröpfungen der drei Zylinderpaare um jeweils 120°KW versetzt auf der Kurbelwelle angeordnet, so daß der erste und sechste Zylinder, der zweite und fünfte Zylinder und der dritte und vierte Zylinder mechanisch jeweils als Zylinderpaare um jeweils 120° KW versetzt parallel laufen. Für einen Sechs-Zylinder-Reihenmotor ergebenden sich zwei Kröpfungsfolgen bzw. zwei Kurbelwellen und vier verschiedene Zündfolgen, nämlich 1 - 4 - 2 - 6 - 3 - 5 oder 1-4-5-6-3-2 oder 1-5-3-6-2-4 oder 1-2-4-6-5-3.

Werden die im HCCI-Modus betriebenen Zylinder mit einem im SI-Modus betriebenen Zylinder in der beschriebenen Weise paarweise verbunden, werden die Abgase unmittelbar nach ihrem Ausschieben in den Abgastrakt genutzt.

Vorteilhaft sind Ausführungsformen der Hybrid-Brennkraftmaschine, bei denen in der Verbindungsleitung ein Ventilelement vorgesehen ist, mit dem die Menge an zurückgeführtem Abgas regelbar ist. Das Ventilelement ist dabei vorzugsweise eine Drosselklappe.

Vorteilhaft sind Ausführungsformen der Hybrid-Brennkraftmaschine, bei denen in dem Ansaugrohr des mindestens einen Zylinders der ersten Zylindergruppe und/oder in dem Ansaugrohr des mindestens einen Zylinders der zweiten Zylindergruppe eine Drosselklappe vorgesehen ist. Die Drosselklappe dient der Quantitätsreglung d. h. der Steuerung der dem Zylinder zugeführten Menge an Frischladung.

Vorteilhaft sind insbesondere Ausführungsformen der Hybrid-Brennkraftmaschine, bei denen der mindestens eine Zylinder der ersten Zylindergruppe und/oder der mindestens eine Zylinder der zweiten Zylindergruppe mit einer Kraftstoffdirekteinspritzung ausgestattet ist.

Vorteilhaft sind Ausführungsformen der Hybrid-Brennkraftmaschine, bei denen der mindestens eine Zylinder der ersten Zylindergruppe und/oder der mindestens eine Zylinder der zweiten Zylindergruppe mit einer variablen Ventilsteuerung ausgestattet ist.

Die Vorteile der beiden zuletzt genannten Ausführungsformen wurden bereits im Rahmen der Beschreibung des erfindungsgemäßen Verfahrens erörtert.

Vorteilhaft sind Ausführungsformen der Hybrid-Brennkraftmaschine, bei denen ein Wärmetauscher vorgesehen ist, dem sowohl die Abgase des mindestens einen Zylinders der zweiten Zylindergruppe als auch die Zylinderfrischladung des mindestens einen Zylinders der ersten Zylindergruppe zuführbar sind, um die Temperatur der dem mindestens einen Zylinder der zweiten Zylindergruppe zugeführten Zylinderfrischladung zu erhöhen.

Im folgenden wird die Erfindung anhand von zwei Ausführungsbeispielen gemäß den Figuren 1 bis 4 näher beschrieben. Hierbei zeigt:
- Fig. 1: schematisch das Motorenkennfeld einer Brennkraftmaschine, in dem der Anwendungsbereich des HCCI-Verfahrens nach dem Stand der Technik gekennzeichnet ist,
- Fig. 2: den Verlauf der Abgastemperatur beim Übergang vom SI-Modus zum HCCI-Modus,
- Fig. 3: schematisch eine erste Ausführungsform einer Brennkraftmaschine, und
- Fig. 4: schematisch eine zweite Ausführungsform einer Brennkraftmaschine.

Figur 1 wurde bereits im Zusammenhang mit dem Stand der Technik beschrieben.

Figur 2 zeigt den Verlauf der Abgastemperatur beim Übergang vom SI-Modus zum HCCI-Modus. Der Temperaturverlauf zeigt, daß die Abgastemperatur um etwa 100°K abnimmt.

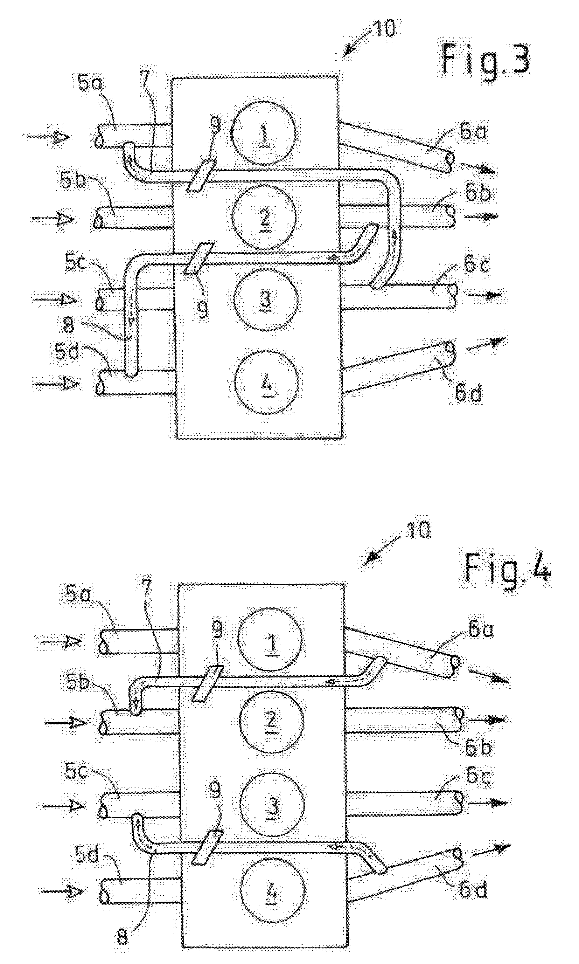

Figur 3 zeigt schematisch eine erste Ausführungsform einer Hybrid-Brennkraftmaschine 10.

Bei der Hybrid-Brennkraftmaschine 10 handelt es sich um einen Vier-Zylinder-Reihenmotor, der einen Betrieb sowohl im HCCI-Modus (homogenous-charge compression-ignition) als auch im SI-Modus (spark ignition) ermöglicht. Jeder Zylinder 1,2,3,4 ist mit einem Ansaugrohr 5a,5b,5c,5d ausgestattet, über das er mit einer Zylinderfrischladung versorgt wird. Zudem verfügen die Zylinder 1,2,3,4 jeweils über ein Abgasrohr 6a,6b,6c,6d, über welches die Abgase der einzelnen Zylinder 1,2,3,4 abgeführt werden.

Die dargestellte Hybrid-Brennkraftmaschine 10 ist dadurch gekennzeichnet, daß der erste Zylinder 1 und der vierte Zylinder 4 eine erste Zylindergruppe bilden, die im HCCI-Modus betrieben wird, und der zweite Zylinder 2 und der dritte Zylinder 3 eine zweite Zylindergruppe bilden, die im SI-Modus betrieben wird. Damit werden die beiden außenliegenden Zylinder 1,4 im HCCI-Modus und die beiden innenliegenden Zylinder 2,3 im SI-Modus betrieben.

Um die Abgase der zweiten Zylindergruppe zur Erhöhung der Temperatur der der ersten Zylindergruppe zugeführten Zylinderfrischladung nutzbar zu machen, ist eine Abgasrückführung vorgesehen. Dabei ist das Abgasrohr 6b des zweiten Zylinders 2 mit dem Ansaugrohr 5d des vierten Zylinders 4 mittels einer Verbindungsleitung 8 verbunden. Das Abgasrohr 6c des dritten Zylinders 3 ist mit dem Ansaugrohr 5a des ersten Zylinders 1 ebenfalls mittels einer Verbindungsleitung 7 verbunden. In beiden Verbindungsleitungen 7,8 ist ein AGR-Ventil vorgesehen, mit dem die Menge an rückgeführtem Abgas geregelt werden kann.

Der Vier-Zylinder-Reihenmotor weist die Zündfolge 1 - 3 - 4 - 2 auf, wobei die einzelnen Zylinder im Abstand von jeweils 180°KW gezündet werden.

Werden die vier Zylinder 1,2,3,4 in der vorgeschlagenen Weise miteinander verbunden, kann eine maximale Ausnutzung der Abgasenergie erfolgen, da den Abgasen keine Zeit zur Abkühlung und ungewollten Wärmeabgabe eingeräumt wird und sie dann zurückgeführt werden, wenn der jeweilige im HCCI-Modus betriebene Zylinder 1,4 die aufzuwärmende Zylinderfrischladung ansaugt.

Die heißen Abgase werden also gerade zu dem Zeitpunkt bereitgestellt, zu dem der Bedarf für diese Gase besteht, wobei die heißen Abgase in die Ansaugleitung 6a des vierten Zylinders 4 gelangen und die Zylinderfrischladung aufheizen. Ähnliches gilt für das Zylinderpaar, das durch den ersten 1 und dritten Zylinder 3 gebildet wird.

Figur 4 zeigt schematisch eine zweite Ausführungsform der Hybrid-Brennkraftmaschine 10. Es sollen nur die Unterschiede zu der in Figur 3 dargestellten Ausführungsform erörtert werden, weshalb im übrigen bezug genommen wird auf Figur 3. Für dieselben Bauteile wurden dieselben Bezugszeichen verwendet.

Im Unterschied zu der in Figur 3 dargestellten Ausführungsform, werden die beiden innenliegenden Zylinder 2,3 im HCCI-Modus und die beiden außenliegenden Zylinder 1,4 im SI-Modus betrieben, so daß der zweite Zylinder 2 und der dritte Zylinder 3 eine erste Zylindergruppe bilden und der erste Zylinder 1 und der vierte Zylinder 4 eine zweite Zylindergruppe bilden.

Das Abgasrohr 6a des ersten Zylinders 1 ist mit dem Ansaugrohr 5b des zweiten Zylinders 2 mittels einer Verbindungsleitung 7 verbunden. Das Abgasrohr 6d des vierten Zylinders 4 ist mit dem Ansaugrohr 5c des dritten Zylinders 3 mittels einer weiteren Verbindungsleitung 8 verbunden.

### Bezugszeichen

- 1: erster Zylinder
- 2: zweiter Zylinder
- 3: dritter Zylinder
- 4: vierter Zylinder
- 5a: Ansaugrohr
- 5b: Ansaugrohr
- 5c: Ansaugrohr
- 5d: Ansaugrohr
- 6a: Abgasrohr
- 6b: Abgasrohr
- 6c: Abgasrohr
- 6d: Abgasrohr
- 7: erste Verbindungsleitung
- 8: zweite Verbindungsleitung
- 9: AGR-Ventil
- 10: Hybrid-Brennkraftmaschine

## Patentansprüche

1. Verfahren zum Betreiben einer Hybrid-Brennkraftmaschine (10), die einen Betrieb sowohl im HCCI-Modus (homogenous-charge compression-ignition) als auch im SI-Modus (spark ignition) ermöglicht und die mindestens zwei Zylindergruppen aufweist, von denen jede Zylindergruppe mindestens einen Zylinder (1,2,3,4) umfaßt, wobei jeder Zylinder (1,2,3,4) mittels eines Ansaugrohres (5a,5b,5c,5d) mit Zylinderfrischladung versorgt wird und dessen Abgas in ein Abgasrohr (6a,6b,6c,6d) abgeführt wird,
**dadurch gekennzeichnet, daß**
■ der mindestens eine Zylinder (1,2,3,4) der ersten Zylindergruppe im HCCI-Modus betrieben wird,
■ der mindestens eine Zylinder (1,2,3,4) der zweiten Zylindergruppe im SI-Modus betrieben wird, und
■ das Abgas des mindestens einen Zylinders (1,2,3,4) der zweiten Zylindergruppe zur Erhöhung der Temperatur der dem mindestens einen Zylinder (1,2,3,4) der zweiten Zylindergruppe zugeführten Zylinderfrischladung verwendet wird.

2. Verfahren nach Anspruch 1,
**dadurch gekennzeichnet, daß**
das Abgasrohr (6a,6b,6c,6d) des mindestens einen Zylinders (1,2,3,4) der zweiten Zylindergruppe mit dem Ansaugrohr (5a,5b,5c,5d) des mindestens einen Zylinders (1,2,3,4) der ersten Zylindergruppe mittels einer Verbindungsleitung (7,8) verbunden wird, und Abgas aus dem Abgasrohr (6a,6b,6c,6d) des mindestens einen Zylinders (1,2,3,4) der zweiten Zylindergruppe in das Ansaugrohr (5a,5b,5c,5d) des mindestens einen Zylinders (1,2,3,4) der ersten Zylindergruppe zurückgeführt wird, um die Temperatur der Zylinderfrischladung des mindestens einen im HCCI-Modus betriebenen Zylinders (1,2,3,4) zu erhöhen.

3. Verfahren nach Anspruch 2,
**dadurch gekennzeichnet, daß**
jede Zylindergruppe mindestens zwei Zylinder (1,2,3,4) aufweist und beide Zylindergruppen die gleiche Anzahl an Zylindern (1,2,3,4) aufweisen, wobei jeweils das Abgasrohr (6a,6b,6c,6d) eines Zylinders (1,2,3,4) der zweiten Zylindergruppe mit dem Ansaugrohr (5a,5b,5c,5d) eines Zylinders (1,2,3,4) der ersten Zylindergruppe mittels einer Verbindungsleitung (7,8) verbunden wird, und Abgas aus den Abgasrohren (6a,6b,6c,6d) der Zylinder (1,2,3,4) der zweiten Zylindergruppe in die Ansaugrohre (5a,5b,5c,5d) der Zylinder (1,2,3,4) der ersten Zylindergruppe zurückgeführt wird, um die Temperatur der Zylinderfrischladung der im HCCI-Modus betriebenen Zylinder (1,2,3,4) zu erhöhen.

4. Verfahren nach Anspruch 3,
**dadurch gekennzeichnet, daß**
in der Verbindungsleitung (7,8) ein Ventilelement (9) vorgesehen ist, mit dem die Menge an zurückgeführtem Abgas geregelt werden.

5. Verfahren nach einem der vorherigen Ansprüche,
**dadurch gekennzeichnet, daß**
die im HCCI-Modus betriebenen Zylinder (1,2,3,4) zusätzlich fremdgezündet werden, um Zündaussetzer und Fehlzündungen zu unterbinden.

6. Verfahren nach einem der vorherigen Ansprüche,
**dadurch gekennzeichnet, daß**
zumindest bei den im HCCI-Modus betriebenen Zylindern (1,2,3,4) der Kraftstoff direkt eingespritzt wird und eine Quantitätsregelung der zugeführten Frischluft mittels einer Variation der Steuerzeiten und/oder des Hubes der zur Steuerung des Ladungswechsels vorgesehenen Ventile erfolgt.

7. Verfahren nach einem der vorherigen Ansprüche,
**dadurch gekennzeichnet, daß**
die im SI-Modus betriebenen Zylinder (1,2,3,4) mit einem Luftüberschuß d. h. im Magerbetrieb betrieben werden.

8. Verfahren nach Anspruch 1,
**dadurch gekennzeichnet, daß**
die Abgase des mindestens einen Zylinders (1,2,3,4) der zweiten Zylindergruppe und die Zylinderfrischladung des mindestens einen Zylinders (1,2,3,4) der ersten Zylindergruppe einem Wärmetauscher zur Erhöhung der Temperatur der dem mindestens einen Zylinder (1,2,3,4) der zweiten Zylindergruppe zugeführten Zylinderfrischladung zugeführt werden.

9. Hybrid-Brennkraftmaschine (10), insbesondere zur Durchführung eines Verfahrens nach einem der vorherigen Ansprüche, die einen Betrieb sowohl im HCCI-Modus (homogenous-charge compression-ignition) als auch im SI-Modus (spark ignition) ermöglicht und die mindestens zwei Zylindergruppen aufweist, von denen jede Zylindergruppe mindestens einen Zylinder (1,2,3,4) umfaßt, wobei jeder Zylinder (1,2,3,4) ein Ansaugrohr (5a,5b,5c,5d) zur Versorgung des Zylinders (1,2,3,4) mit Zylinderfrischladung und ein Abgasrohr (6a,6b,6c,6d) zur Abführung der Abgase aufweist,
**dadurch gekennzeichnet, daß**
■ der mindestens eine Zylinder (1,2,3,4) der ersten Zylindergruppe im HCCI-Modus betreibbar ist,
■ der mindestens eine Zylinder (1,2,3,4) der zweiten Zylindergruppe im SI-Modus betreibbar ist, und
■ Mittel (7,8) vorgesehen sind, die das Abgas des mindestens einen Zylinders (1,2,3,4) der zweiten Zylindergruppe zur Erhöhung der Temperatur der dem mindestens einen Zylinder (1,2,3,4) der zweiten Zylindergruppe zugeführten Zylinderfrischladung nutzbar machen.

10. Hybrid-Brennkraftmaschine (10) nach Anspruch 9, insbesondere zur Durchführung eines Verfahrens nach einem der Ansprüche 2 bis 7,
**dadurch gekennzeichnet, daß**
das Abgasrohr (6a,6b,6c,6d) des mindestens einen Zylinders (1,2,3,4) der zweiten Zylindergruppe mit dem Ansaugrohr (5a,5b,5c,5d) des mindestens einen Zylinders (1,2,3,4) der ersten Zylindergruppe mittels einer Verbindungsleitung (7,8) verbunden ist, so daß Abgas aus dem Abgasrohr (6a,6b,6c,6d) des mindestens einen Zylinders (1,2,3,4) der zweiten Zylindergruppe in das Ansaugrohr (5a,5b,5c,5d) des mindestens einen Zylinders (1,2,3,4) der ersten Zylindergruppe rückführbar ist, um die Temperatur der Zylinderfrischladung des mindestens einen im HCCI-Modus betriebenen Zylinders (1,2,3,4) zu erhöhen.

11. Hybrid-Brennkraftmaschine (10) nach Anspruch 10,
**dadurch gekennzeichnet, daß**
jede Zylindergruppe mindestens zwei Zylinder (1,2,3,4) aufweist und beide Zylindergruppen die gleiche Anzahl an Zylindern (1,2,3,4) aufweisen, wobei jeweils das Abgasrohr (6a,6b,6c,6d) eines Zylinders (1,2,3,4) der zweiten Zylindergruppe mit dem Ansaugrohr (5a,5b,5c,5d) eines Zylinders (1,2,3,4) der ersten Zylindergruppe mittels einer Verbindungsleitung (7,8) verbunden ist, so daß Abgas aus den Abgasrohren (6a,6b,6c,6d) der Zylinder (1,2,3,4) der zweiten Zylindergruppe in die Ansaugrohre (5a,5b,5c,5d) der Zylinder (1,2,3,4) der ersten Zylindergruppe rückführbar ist, um die Temperatur der Zylinderfrischladung der im HCCI-Modus betriebenen Zylinder (1,2,3,4) zu erhöhen.

12. Hybrid-Brennkraftmaschine (10) nach Anspruch 11,
**dadurch gekennzeichnet, daß**
die Hybrid-Brennkraftmaschine (10) ein Vier-Zylinder-Reihenmotor ist und der erste (1) und vierte Zylinder (4) die erste Zylindergruppe bilden, wohingegen der zweite (2) und dritte Zylinder (3) die zweite Zylindergruppe bilden, wobei das Abgasrohr (6b) des zweiten Zylinders (2) mit dem Ansaugrohr (5d) des vierten Zylinders (4) mittels einer Verbindungsleitung (8) verbunden ist und das Abgasrohr (6c) des dritten Zylinders (3) mit dem Ansaugrohr (5a) des ersten Zylinders (1) mittels einer Verbindungsleitung (7) verbunden ist.

13. Hybrid-Brennkraftmaschine (10) nach Anspruch 11,
**dadurch gekennzeichnet, daß**
die Hybrid-Brennkraftmaschine (10) ein Vier-Zylinder-Reihenmotor ist und der zweite (2) und dritte Zylinder (3) die erste Zylindergruppe bilden, wohingegen der erste (1) und vierte Zylinder (4) die zweite Zylindergruppe bilden, wobei das Abgasrohr (6a) des ersten Zylinders (1) mit dem Ansaugrohr (5b) des zweiten Zylinders (2) mittels einer Verbindungsleitung (7) verbunden ist und das Abgasrohr (6d) des vierten Zylinders (4) mit dem Ansaugrohr (5c) des dritten Zylinders (3) mittels einer Verbindungsleitung (8) verbunden ist.

14. Hybrid-Brennkraftmaschine (10) nach Anspruch 11,
**dadurch gekennzeichnet, daß**
die Hybrid-Brennkraftmaschine (10) ein Sechs-Zylinder-Reihenmotor ist und drei Zylinder die erste Zylindergruppe bilden und drei Zylinder die zweite Zylindergruppe bilden, wobei jeweils das Abgasrohr eines Zylinders der zweiten Gruppe mit einem Ansaugrohr eines Zylinders der ersten Zylindergruppe, der 120°KW oder 240°KW vorher gezündet wird, mittels einer Verbindungsleitung verbunden ist.

15. Hybrid-Brennkraftmaschine (10) nach einem der Ansprüche 10 bis 14,
**dadurch gekennzeichnet, daß**
in der Verbindungsleitung (7,8) ein Ventilelement (9) vorgesehen ist, mit dem die Menge an zurückgeführtem Abgas regelbar ist.

16. Hybrid-Brennkraftmaschine (10) nach Anspruch 15,
**dadurch gekennzeichnet, daß**
das Ventil eine Drosselklappe ist.

17. Hybrid-Brennkraftmaschine (10) nach einem der Ansprüche 9 bis 16,
**dadurch gekennzeichnet, daß**
in dem Ansaugrohr (5a,5b,5c,5d) des mindestens einen Zylinders (1,2,3,4) der ersten Zylindergruppe und/oder in dem Ansaugrohr (5a,5b,5c,5d) des mindestens einen Zylinders (1,2,3,4) der zweiten Zylindergruppe eine Drosselklappe vorgesehen ist.

18. Hybrid-Brennkraftmaschine (10) nach einem der Ansprüche 9 bis 17,
**dadurch gekennzeichnet, daß**
der mindestens eine Zylinder (1,2,3,4) der ersten Zylindergruppe und/oder der mindestens eine Zylinder (1,2,3,4) der zweiten Zylindergruppe mit einer Kraftstoffdirekteinspritzung ausgestattet ist.

19. Hybrid-Brennkraftmaschine (10) nach einem der Ansprüche 9 bis 18,
**dadurch gekennzeichnet, daß**
der mindestens eine Zylinder (1,2,3,4) der ersten Zylindergruppe und/oder der mindestens eine Zylinder (1,2,3,4) der zweiten Zylindergruppe mit einer variablen Ventilsteuerung ausgestattet ist.

20. Hybrid-Brennkraftmaschine (10) nach Anspruch 9,
**dadurch gekennzeichnet, daß**
ein Wärmetauscher vorgesehen ist, dem sowohl die Abgase des mindestens einen Zylinders (1,2,3,4) der zweiten Zylindergruppe als auch die Zylinderfrischladung des mindestens einen Zylinders (1,2,3,4) der ersten Zylindergruppe zuführbar sind, um die Temperatur der dem mindestens einen Zylinder (1,2,3,4) der zweiten Zylindergruppe zugeführten Zylinderfrischladung zu erhöhen.
